Europäisches Patentamt

European Patent Office

Office européen des brevets

(19)

(11) Numéro de publication : **0 432 011 A1**

# (12) DEMANDE DE BREVET EUROPEEN

(21) Numéro de dépôt : 90403337.0

(22) Date de dépôt : 26.11.90

(51) Int. Cl.⁵ : **B29C 35/12,** B29C 33/08, B29C 39/38

(30) Priorité : 07.12.89 FR 8916180

(43) Date de publication de la demande :
12.06.91 Bulletin 91/24

(84) Etats contractants désignés :
**BE DE ES GB IT LU NL SE**

(71) Demandeur : ANVER S.A.
**2, rue Suchet, BP 06**
**F-94701 Maisons-Alfort Cédex (FR)**

(72) Inventeur : Oriez, Robert
**75, Avenue Ronsard**
**F-41100 Vendôme (FR)**
Inventeur : Gras, Elie
**150, Chemin de la Carandière**
**F-69730 Genay (FR)**

(74) Mandataire : Orès, Bernard et al
**Cabinet ORES 6, Avenue de Messine**
**F-75008 Paris (FR)**

(54) **Appareillage de moulage de matière plastique, moule pour sa mise en oeuvre et produits ainsi obtenus.**

(57)    Appareillage de moulage pour la fabrication de pièces en matières plastiques à partir d'un matériau liquide, polychlorure de vinyle (PVC) sous forme de plastisol ou d'organosol, ou également mélange d'au moins les deux composants de base (polyol et isocyanate) sous forme liquide d'un élastomère de polyuréthanne avec application d'une réaction exothermique pour provoquer la polymérisation et/ou la réticulation de la matière plastique.

La réaction est conduite, à l'air libre, dans un moule (M) auquel on applique un champ électrique haute fréquence.

FIG. 3

# APPAREILLAGE DE MOULAGE DE MATIERE PLASTIQUE, MOULE POUR SA MISE EN OEUVRE ET PRODUITS AINSI OBTENUS

L'invention a pour objet un appareillage pour le moulage de matière plastique, les moules pour sa mise en oeuvre ainsi que les produits ainsi obtenus.

L'importance de la durée du temps de fabrication des produits industriels obtenus par moulage de matières plastiques est reconnue de longue date aussi bien dans le cas de matières thermoplastiques, comme des polychlorures de vinyle (PVC) sous forme de plastisols ou organosols liquides, que pour des matières plastiques thermodurcissables, comme des polyuréthannes, faisant intervenir une réaction exothermique pour la réticulation ou la polycondensation de la ou des résine(s) de base. Par durée du temps de fabrication on entend ici non seulement la phase de moulage proprement dite avec élévation de température mais aussi la phase suivante de refroidissement indispensable notamment pour des plastisols. Cette durée peut être relativement élevée, y compris pour des pièces de petites dimensions, puisqu'il n'est pas inhabituel de prévoir, dans le cas de plastisols ou organosols liquides, des phases de réaction exothermique de l'ordre de 10 à 15 minutes suivies de phases de refroidissement (par exemple en tunnel ou en faisant application d'un appareil à plaques refroidies) de l'ordre de 3 à 4 minutes, une durée comparable étant également nécessaire pour la mise en oeuvre d'élastomères de polyuréthanne par les procédés usuels de fabrication de pièces de ces matériaux. Si l'on cherche, pour les derniers matériaux mentionnés ci-avant, à réduire la durée de fabrication, par exemple par des machines d'injection à deux têtes, l'une délivrant le polyol et l'autre l'isocyanate qu'il convient de faire réagir, on raccourcit il est vrai le temps de fabrication, mais au prix de difficultés techniques dont l'exploitation n'est pas toujours justifiée pour certains types de produits. En outre, et dans cette technique plus complexe, de nombreux facteurs doivent être surveillés, comme la température du moule, la température ambiante, etc... de sorte que le coût d'investissement et de fabrication par pièce produite est parfois un obstacle dirimant à l'emploi de cette technique.

Etant donné qu'il existe, cependant, à côté des plastisols ou organosols liquides des compositions d'élastomères polyuréthannes susceptibles d'être mises en oeuvre dans un délai de 4 à 5 heures après leur préparation et mélanges sous forme liquide, lesdites compositions étant polymérisables pour fournir un produit thermodurci par un traitement thermique, la Demanderesse a cherché à résoudre le problème de la diminution de la durée de fabrication de certains articles en matière plastique en faisant appel à des techniques autres que celles utilisées, à ce jour, pour ces types de matériaux de base, en particulier en développant un appareillage permettant l'application d'un champ électrique haute-fréquence.

Si des appareillages pour la fabrication de pièces en matière plastique dans un moule avec application d'un champ électrique haute-fréquence audit moule ont déjà été proposés, par exemple dans GB-A-1 592 383 ou US-A-2 888 366, ces appareillages sont destinés à la fabrication de joints, comme des joints d'étanchéité dans des bouchons en matière plastique pour lesquels n'ont pas à être respectées, avec grande précision, les formes et/ou les dimensions d'une série de bouchons.

C'est, par conséquent, un but général de l'invention de fournir un appareillage pour le moulage de matières plastiques qui permette de réduire de façon très appréciable le temps de fabrication d'objets en ces matières, notamment en polychlorure de vinyle ou en élastomère de polyuréthanne.

C'est, encore, un but de l'invention de fournir un tel appareillage de mise en oeuvre particulièrement simple et, de ce fait, de coûts d'investissement et d'exploitation extrêmement faibles.

C'est, aussi, un but de l'invention de fournir un appareillage bien approprié à la fabrication de pièces de l'industrie automobile, par exemple, et sans que cette indication ait quelque caractère limitatif que ce soit, des embases de filtre à air ou produits analogues.

Un appareillage selon l'invention, pour la fabrication à l'air libre dans un moule de pièces en matière plastiques à partir d'un matériau liquide, polychlorure de vinyle (PVC) sous forme de plastisol ou d'organisol, ou également mélange d'au moins les deux composants de base (polyol et isocyanate) d'un élastomère de polyuréthanne avec application d'une réaction exothermique pour provoquer la polymérisation et/ou la réticulation de la matière plastique avec des moyens d'application d'un champ électrique haute-fréquence audit moule est caractérisé en ce que ledit moule est en un matériau choisi parmi les résines de silicone, les polyamides ou des polytétrafluoroéthylènes et en ce que lesdits moyens d'application du champ électrique haute-fréquence comprennent une partie centrale, intérieure au moule, formant un noyau en un matériau conducteur propre à être relié à la masse d'un générateur de courant haute-fréquence ou à une borne de ce dernier.

Dans une forme de réalisation préférée, l'appareillage est en outre caractérisé en ce que ladite partie formant noyau est avantageusement une résine silicone fortement chargée en particules métalliques, comme des particules d'aluminium ou analogue.

L'invention trouve une application très avantageuse pour la fabrication d'embases de filtre à air de moteurs de véhicules automobiles et elle vise, aussi, par conséquent, les moules spécifiques pour la réalisation de ces embases ou filtres de même que les filtres et/ou embases obtenus par mise en oeuvre de l'appareillage.

L'invention sera bien comprise par la description qui suit, faite à titre d'exemple et en référence au dessin annexé dans lequel :

- la figure 1 est une vue schématique, en perspective, d'un filtre à air de moteur d'automobile ;
- la figure 2 est une vue partie en coupe, partie en élévation d'une embase de filtre ;
- la figure 3 est une vue très schématique d'un appareillage selon l'invention.

Dans la description qui suit, l'invention est explicitée comme appliquée à la fabrication d'embases de filtres à air de véhicules automobiles, mais cette indication n'est donnée que dans un but d'illustration et sans qu'aucun caractère limitatif ne lui soit bien entendu attaché.

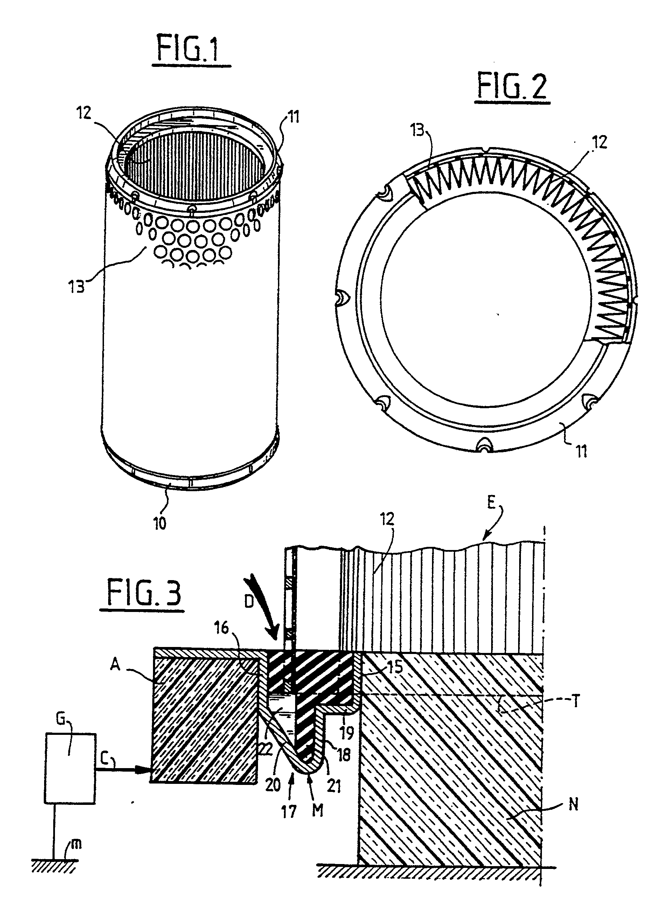

Comme montré sur les figures 1 et 2, un filtre à air de moteur de véhicule automobile comprend, de façon en soi connue, un filtre proprement dit en papier ou matériau analogue, plissé, et dont la forme générale est celle d'un cylindre allongé (dans la réalisation représentée) ou d'un anneau de diamètre plusieurs fois plus grand que sa hauteur (dans les réalisations, non représentées, de filtre pour moteur de véhicule de tourisme, par exemple). Un ou des renfort(s) métallique(s) grillagé(s) peuvent être prévus à l'extérieur et/ou à l'intérieur du cylindre ou de l'anneau de papier plissé. Aux deux extrémités du cylindre ou de l'anneau de papier, deux embases 10 et 11, en matière plastique, ou en élastomère, "ferment" les canaux que ménagent les plis adjacents de la feuille de papier d'une part, assurent la cohésion mécanique du filtre, d'autre part, et ont simultanément un rôle de joints d'étanchéité à l'air lorsque le filtre est placé dans un carter à couvercle amovible.

Pour la fabrication de tels filtres l'invention prévoit de tout d'abord élaborer un cylindre ou anneau de papier plissé 12 ensuite garni, le cas échéant, d'un renfort métallique grillage 13 et de former aux deux extrémités du cylindre ou de l'anneau les embases 10 et 11 par moulage de matière plastique ou d'élastomère. Pour ce faire, on réalise d'abord un moule M en un matériau électriquement isolant, comme une résine de silicone, ayant un contour plan circulaire et une section droite correspondant à celle recherchée pour les embases 10 et 11, par exemple, dans la réalisation représentée, à paroi intérieure cylindrique 15 et paroi extérieure cylindrique 16 réunies par un bec à section droite en V, 17, dont l'aile verticale (sur le dessin) 18 est raccordée à la paroi 15 par un redan 19. Sur la face inclinée 20 de la couronne 21 ainsi définie sont disposés, suivant une répartition angulaire régulière, des tétons 22.

C'est sur ces derniers qu'est rapporté par sa tranche inférieure, T, l'ensemble E formé par la feuille de papier plissé munie, le cas échéant, de son ou des renfort(s) en métal grillagé, et cela après qu'ait été versée dans la couronne 21 une certaine quantité de plastisol ou d'organosol ou encore de mélange des deux composants de l'élastomère de polyuréthanne que l'on souhaite polymériser et/ou réticuler.

Pour la réticulation et/ou polymérisation à l'air libre de cette masse de matière liquide, l'invention fait application d'un champ électrique haute-fréquence appliqué au moule M par l'intermédiaire d'un anneau A adjacent à la face 16 du moule et d'un noyau N ou masse intérieure audit moule et adjacent à sa face 15.

L'anneau A est relié par un conducteur C à une des bornes d'un générateur de courant haute-fréquence G, par exemple un générateur engendrant un courant à fréquence comprise entre 13 et 100 MHz, l'autre borne du générateur G étant reliée à la masse m comme le noyau N.

En variante, l'anneau A est relié à la masse et le noyau N à une borne du générateur G.

Une première embase 10 est ainsi produite en une dizaine de secondes, après que la température de la masse de matériau liquide dosée dans le moule M restant à l'air libre ait été portée à une température de l'ordre de 80 à 120°C.

L'embase ainsi fabriquée peut être démoulée en un temps court, de l'ordre d'une minute, une nouvelle quantité de matériau de base coulée dans la couronne 21 et le processus qui vient être d'écrit à nouveau reproduit pour la fabrication de l'autre embase.

On constate, de façon quelque peu surprenante, que la présence de la ou des armature(s) grillagée(s) métallique(s), lorsqu'elle(s) existe(nt) ne perturbe pas le fonctionnement du générateur G de courant haute-fréquence.

De bons résultats ont été obtenus en utilisant un moule M en polypropylène ou en Téflon (une Marque Déposée de la société DUPONT de NEMOURS) l'anneau A et le noyau N étant, quant à eux, réalisés en une résine de silicone fortement chargée de particules d'aluminium.

Alors que la durée de fabrication par les méthodes connues d'une embase de filtre à air en élastomère ayant un diamètre de 300 mm et une hauteur de 150 mm est d'environ 6 minutes, la mise en oeuvre d'un courant haute-fréquence de 27 MHz permet de réaliser à l'aide d'un appareillage tel qu'il vient d'être décrit une même embase en une durée de 1 minute.

L'invention n'est pas limitée, bien entendu à la forme de réalisation et aux exemples qui viennent d'être décrits.

Elle trouve application pour le moulage de matières plastiques du type organosols ou plastisols liquides et/ou d'élastomères de polyuréthanne de compositions les plus divers et pour la fabrication d'objets industriels extrêmement variés.

L'invention est avantageusement mise en oeuvre sur une machine du type carrousel ou linéaire, agencée pour le dosage du matériau constitutif d'une embase, la mise en place automatique dans le moule du cylindre ou anneau de papier plissé (avec ou sans renfort grillagé métallique) l'extraction après polymérisation et/ou réticulation, retournement du cylindre ou anneau de papier ainsi garni d'une première embase, dosage d'une seconde quantité de matériau à polymériser et/ou réticuler, mise en place de l'autre tranche du papier plissé, nouveau passage du courant haute-fréquence, extraction du moule du filtre ainsi muni de ses deux embases et déchargement hors de la machine.

## Revendications

1. Appareillage pour la fabrication à l'air libre dans un moule (M) de pièces en matière plastiques à partir d'un matériau liquide, polychlorure de vinyle (PVC) sous forme de plastisol ou d'organisol, ou également mélange d'au moins les deux composants de base (polyol et isocyanate) d'un élastomère de polyuréthanne avec application d'une réaction exothermique pour provoquer la polymérisation et/ou la réticulation de la matière plastique avec des moyens (G, A, N) d'application d'un champ électrique haute-fréquence audit moule (M) caractérisé en ce que ledit moule est en un matériau choisi parmi les résines de silicone, les polyamides ou des polytétrafluoroéthylènes et en ce que lesdits moyens d'application du champ électrique haute-fréquence comprennent une partie centrale, intérieure au moule (M), formant un noyau (N) en un matériau conducteur propre à être relié à la masse d'un générateur (G) de courant haute-fréquence ou à une borne de ce dernier.

2. Appareillage selon la revendication 1, caractérisé en ce que ladite partie (N) est avantageusement une résine silicone fortement chargée en particules métalliques comme des particules d'aluminium ou analogue.

3. Dispositif de moule propre à entrer dans la constitution d'un appareillage selon la revendication 1, caractérisé en ce qu'il comprend un moule proprement dit (M) en un matériau choisi parmi les résines de silicone, les polyamides, ou les polytétrafluoroéthylènes et, adjacents audit moule (M), un noyau interne (N) conducteur de l'électricité, avantageusement en résine de silicone fortement chargée de particules métalliques et un anneau externe (A) en le même matériau que celui constitutif du noyau (N).

4. Produit obtenu à l'aide d'un appareillage selon la revendication 1 ou d'un moule selon la revendication 3 et, en particulier, embase de filtre à air et filtre à air de véhicule automobile comprenant de telles embases (10, 11).

## FIG.1

## FIG.2

## FIG.3

EP 0 432 011 A1

# RAPPORT DE RECHERCHE EUROPEENNE

Office européen des brevets

Numero de la demande

EP 90 40 3337

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | US-A-2 888 366 (BARSKY)<br>* En entier *<br>--- | 1,3-4 | B 29 C 35/12<br>B 29 C 33/08<br>B 29 C 39/38 |
| Y | US-A-4 597 922 (DURBIN)<br>* En entier *<br>--- | 1,3-4 | |
| D,X | GB-A-1 592 383 (METAL BOX)<br>* En entier *<br>--- | 1 | |
| X | EP-A-0 220 908 (CONTINENTAL WHITE CAP)<br>* Revendications *<br>--- | 1 | |
| A | US-A-2 604 666 (G.P. BOSOMWORTH)<br>* Colonne 2, ligne 33 - colonne 3, ligne 13; colonne 4, ligne 62 - colonne 5, ligne 57; figure 1 *<br>--- | 1,3-4 | |
| A | US-A-2 857 622 (R.B. CLEVERLY)<br>* Colonne 4, ligne 3 - colonne 6, ligne 5; figure 4 *<br>----- | 1-3 | |

### DOMAINES TECHNIQUES RECHERCHES (Int. Cl.5)

B 29 C

Le présent rapport a été établi pour toutes les revendications

| Lieu de la recherche | Date d'achèvement de la recherche | Examinateur |
|---|---|---|
| LA HAYE | 18-01-1991 | VOUTSADOPOULOS C. |